# FASCICULE DE BREVET EUROPEEN

(11) **EP 3 217 007 B1**
(45) Date de publication et mention de la délivrance du brevet: **15.08.2018**
(21) Numéro de dépôt: 17150600.9
(22) Date de dépôt: 09.01.2017
(51) Int. Cl.: F02M 26/64, F02D 9/16, F16K 11/076, F02M 26/70

(54) **VANNE DE MODULATION SIMULTANÉE DE DEUX FLUX FLUIDE, NOTAMMENT POUR DOSAGE DE GAZ RECIRCULÉS DANS UN MOTEUR À COMBUSTION INTERNE**
VENTIL ZUR GLEICHZEITIGEN REGELUNG VON ZWEI FLUIDSTRÖMEN, INSBESONDERE FÜR DIE DOSIERUNG VON RÜCKGEFÜHRTEN GASEN IN EINEM VERBRENNUNGSMOTOR
VALVE FOR SIMULTANEOUS MODULATION OF TWO FLUID STREAMS, IN PARTICULAR FOR DOSING RECIRCULATED GASES IN AN INTERNAL COMBUSTION ENGINE

(30) Priorité: 08.03.2016 FR 1651918
(43) Date de publication de la demande: 13.09.2017
(73) Titulaire: Renault s.a.s, 92100 Boulogne-Billancourt (FR)
(72) Inventeur: MOULIN, Jean-François, 92800 PUTEAUX (FR); COBLENCE, Philippe, 92340 BOURG-LA-REINE (FR)

(56) Documents cités:
- EP-A1- 2 881 571
- EP-A2- 0 887 541
- EP-A2- 2 333 289
- WO-A1-2008/089985
- DE-A1- 19 631 337
- FR-A1- 2 928 704

## Description

L'invention a pour objet les moteurs à combustion interne, et plus spécifiquement les moteurs à combustion interne avec recirculation des gaz brûlés. Dans certains moteurs à combustion interne, une partie des gaz brûlés sortant des cylindres du moteur peuvent être ramenés vers le collecteur d'air du moteur pour modifier les conditions de combustion du moteur. Ce système de recirculation est souvent désigné par l'acronyme "EGR" (Exhaust Gas Recirculation), et les gaz recirculés sont souvent désignés comme les gaz EGR.

Afin de doser la proportion de gaz EGR mélangée à de l'air frais pour alimenter les chambres de combustion du moteur, on utilise de manière courante une première vanne, par exemple une vanne à clapet pour moduler le débit d'air frais admis. Une seconde vanne peut être également utilisée, par exemple une vanne à clapet, pour réguler le débit de gaz EGR. On utilise donc deux vannes, et deux actionneurs. Au moins une des vannes est en outre soumise à des températures élevées car elle est parcourue par les gaz brûlés.

Un premier système de dosage de gaz réinjectés dans le moteur est présenté dans la publication US 6 062 205 A. Toutefois le système présenté n'autorise pas une combinaison d'air frais et de gaz brulés réinjectés.

La publication EP 2 333 289-B1 divulgue une vanne de mélange d'air frais et de gaz brulés d'échappement. Cependant le système de dosage décrit n'autorise que deux positions de fonctionnement. C'est ainsi que lorsque le papillon d'air frais est en position ouverte, l'entrée EGR est fermée, ce qui ne permet pas un véritable mélange en continu des deux gaz. La publication EP 2 881 571 A1 décrit un dispositif de contrôle d'un flux de gaz d'admission et de gaz d'échappement recirculés selon le préambule de la revendication 1. L'invention a pour but de proposer un système permettant de doser la proportion de gaz recirculés renvoyée vers le moteur, le système étant plus simple à réaliser, moins cher et plus fiable que les systèmes existants à deux vannes.

A cette fin, un groupe moteur comprenant un moteur à combustion interne, comprend une arrivée d'air frais et une arrivée de gaz brûlés recirculés débouchant en amont des cylindres du moteur. L'arrivée d'air frais et l'arrivée de gaz brûlés débouchent dans une même vanne à boisseau rotatif, dont la sortie est reliée à un collecteur d'admission du moteur, l'arrivée d'air frais et l'arrivée de gaz recirculés étant décalées axialement l'une par rapport à l'autre le long de l'axe de rotation du boisseau. Selon une variante de réalisation équivalente, la sortie vers le collecteur d'admission et l'arrivée de gaz recirculés sont décalées axialement l'une par rapport à l'autre le long de l'axe de rotation du boisseau.

La vanne ne comprend de préférence qu'un seul boisseau rotatif.

La sortie de la vanne peut être connectée directement ou indirectement au collecteur d'admission au travers d'autres éléments interposés sur le trajet de fluide, tels qu'un refroidisseur par exemple.

Le groupe moteur peut comprendre une sortie de fluide partant de la vanne à boisseau vers le collecteur d'admission du moteur, la direction d'écoulement au niveau de la sortie de fluide étant sensiblement alignée avec l'arrivée d'air frais. Les directions d'écoulement au niveau de l'arrivée et au niveau de la sortie de fluide peuvent être parallèles et sensiblement coaxiales. Selon une variante de réalisation, les directions d'écoulement de l'arrivée et de la sortie de fluide peuvent être alignées au sens large du terme, les deux directions étant non parallèles mais se prolongeant sensiblement vers un même point, intérieur à la vanne. Avantageusement, le boisseau rotatif comprend une rainure creusée à la surface du boisseau pour autoriser une entrée simultanée de gaz brûlés recirculés et d'air frais dans la rainure. La rainure ainsi disposée contribue à permettre une sortie simultanée de gaz brûlés recirculés et d'air frais vers le collecteur d'admission. Le boisseau peut comprendre pour cela une gorge de régulation reliée à la rainure et s'étendant au moins pour partie transversalement à l'axe de rotation du boisseau.

La rainure est disposée de manière à, pour au moins une position angulaire du boisseau, permettre de connecter la rainure simultanément à l'arrivée de gaz brûlés recirculés et à l'arrivée d'air frais. La rainure peut pour cela s'étendre axialement entre l'arrivée d'air frais et l'arrivée de gaz brûlés recirculés (ou, dans un mode de réalisation équivalent, s'étendre axialement entre l'arrivée de gaz brûlés recirculés et la sortie vers le collecteur d'admission).

Le groupe moteur peut par exemple comprendre un système de vanne à boisseau, le système de vanne comprenant un carter de vanne, le carter de vanne définissant :
- une première arrivée de fluide alignée avec une première sortie de fluide,
- une deuxième arrivée de fluide,
- un logement central du carter, interposé entre la première arrivée de fluide et la première sortie de fluide, et dans lequel débouche la deuxième arrivée de fluide,
le système de vanne comprenant en outre un boisseau monté à l'intérieur du logement pour être rotatif autour d'un axe de la vanne,
le boisseau étant percé, transversalement à l'axe, d'une gorge de régulation placée de manière à être successivement, en fonction de la position angulaire du boisseau autour de l'axe, alignée à des degrés variables avec la première arrivée de fluide, de manière à offrir une section efficace de passage variable entre la première arrivée de fluide et la première sortie de fluide.

La deuxième arrivée de fluide étant décalée axialement par rapport à la première arrivée de fluide et par rapport à la gorge de régulation,
et la surface du boisseau étant creusée d'une rainure s'étendant parallèlement à l'axe, entre la gorge de régulation et la position axiale de la deuxième arrivée de fluide, la rainure communiquant avec la gorge de régulation, la position et la largeur angulaires de la rainure étant choisies pour pouvoir successivement, en fonction de la position angulaire du boisseau autour de l'axe, isoler la deuxième arrivée de fluide de la rainure et de la gorge de régulation, puis faire déboucher la deuxième arrivée de fluide de manière variable dans la rainure.

Avantageusement, la largeur angulaire de la rainure peut être supérieure ou égale à la largeur angulaire de la deuxième arrivée de fluide.

L'axe d'écoulement joignant la première arrivée de fluide et la première sortie de fluide peut être excentré par rapport à l'axe de rotation du boisseau.

La gorge de régulation est par exemple obtenue en effectuant un perçage cylindrique traversant le boisseau. L'axe de perçage est de préférence perpendiculaire à l'axe de rotation du boisseau. L'axe de perçage est de préférence excentré par rapport à l'axe de rotation du boisseau.

Selon une variante de réalisation, l'axe de perçage est disposé en oblique par rapport à l'axe de rotation du boisseau.

Selon un mode de réalisation préféré, la première arrivée de fluide et la première sortie de fluide sont sensiblement cylindriques. Leurs diamètres peuvent avantageusement différer chacun de moins de 10% par rapport au diamètre de perçage de la gorge.

Le logement central du carter entourant la surface extérieure du boisseau est sensiblement cylindrique.

La rainure peut présenter une profondeur radiale inférieure ou égale au quart du diamètre du boisseau.

Avantageusement, la première arrivée de fluide est décalée angulairement autour de l'axe de rotation du boisseau par rapport à la deuxième arrivée de fluide, d'une valeur angulaire telle qu'au cours de la rotation du boisseau, au début du recouvrement partiel de la rainure avec la deuxième arrivée de fluide, l'axe de la gorge de régulation est incliné dans un premier sens par rapport à un axe commun de la première arrivée de fluide et de la première sortie de fluide, et à la fin du recouvrement total de la deuxième arrivée de fluide par la rainure, l'axe de la gorge de régulation est incliné dans un second sens opposé au premier sens, par rapport à l'axe commun de la première arrivée de fluide et de la première sortie de fluide.

Quelques buts, caractéristiques et avantages de l'invention apparaîtront à la lecture de la description suivante, donnée uniquement à titre d'exemple non limitatif, et faite en références aux figures annexées sur lesquelles :
La figure 1 est une vue schématique en perspective, du principe de fonctionnement d'une vanne de mélange d'air frais et de gaz EGR selon l'invention;
La figure 2 est une vue schématique de la vanne de la figure 1, vue en coupe perpendiculairement à l'axe de rotation d'un boisseau de la vanne.

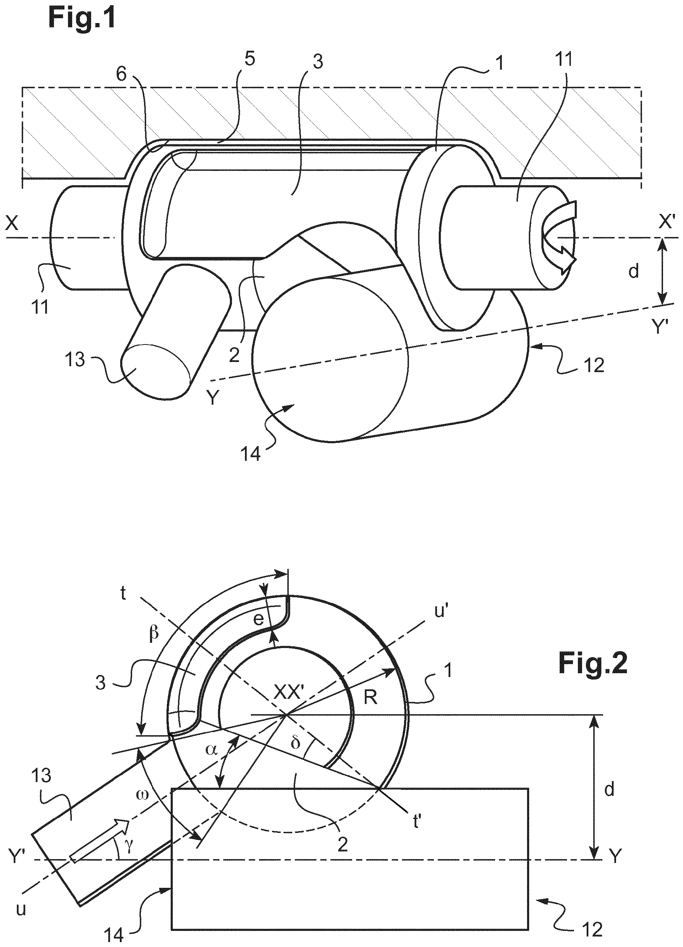

Tel qu'illustré sur la figure 1, une canalisation d'alimentation en air frais d'un moteur d'un véhicule automobile traverse un carter 4 de vanne, en arrivant par une première arrivée 12 de fluide entrant dans le carter, et en ressortant par une première sortie 14 de fluide sortant du carter, sensiblement aligné avec la première arrivée 12. Dans l'exemple illustré, la première arrivée 12 et la première sortie 14 sont sensiblement alignées, sont de section cylindrique, et sont sensiblement de même diamètre. On peut envisager des variantes de réalisation avec des sections différentes d'arrivée et de sortie, ainsi qu'un éventuel angle entre la canalisation d'arrivée et la canalisation de sortie repartant du carter 4. Dans le carter 4 est également ménagée une deuxième arrivée de fluide 13 décalée axialement par rapport à la première arrivée de fluide 12 et la première sortie de fluide 14. La deuxième arrivée de fluide 13 peut servir typiquement à amener un flux de gaz EGR dans la vanne, et être à ce titre connectée à une canalisation de recirculation de gaz d'échappement. La section de la deuxième arrivée de fluide peut être inférieure à la section de la première arrivée de fluide, tout en restant de grandeur comparable, par exemple peut être compris entre 0,2 et 1 fois la section de la première arrivée de fluide.

Dans le carter 4, dont l'emplacement est indiqué de manière très schématique sur la figure, est ménagé un logement cylindrique 5, à l'intérieur duquel est installé un boisseau rotatif 1, monté de manière à pouvoir tourner autour d'un axe XX' que l'on désigne par la suite comme l'axe de rotation de la vanne. Le carter 4 est ici représenté schématiquement comme une pièce massive englobant le logement cylindrique 5. En réalité le carter 4 peut présenter une épaisseur bien inférieure à celle représentée, tout en étant conçu pour permettre de définir le logement cylindrique 5 accueillant le boisseau 1 et son éventuel système de palier, et pour permettre de définir la première arrivée 12, la deuxième arrivée 13, et la première sortie 14 de fluide avec les étanchéités nécessaires.

Dans l'exemple illustré, le boisseau 1 est de forme globalement cylindrique, et est soutenu à ses deux extrémités par des paliers 11 permettant de le faire tourner par rapport au carter 4. Dans le carter 4 débouche également une deuxième arrivée de fluide 13 décalée axialement le long de l'axe XX' par rapport à la première arrivée 12 et la première sortie 14 de fluide.

Le logement cylindrique 5 du carter 4 comporte typiquement une surface cylindrique intérieure 6 faisant face au boisseau 1, avec un écart radial suffisamment réduit par rapport à la surface extérieure 7 correspondant au contour extérieur cylindrique du boisseau 1, pour limiter les écoulements de fluide entre les surfaces cylindriques 6 et 7. Un perçage cylindrique formant gorge de régulation 2, traverse le boisseau 1 suivant une direction sensiblement perpendiculaire à l'axe XX' de rotation de la vanne.

Dans l'exemple illustré, l'axe YY' correspondant à l'axe central commun de la première arrivée de fluide 12 et de la première sortie de fluide 14, se trouve dans un plan perpendiculaire à l'axe de rotation XX'. On peut envisager des variantes de réalisation dans lesquelles l'axe YY' n'est pas perpendiculaire à l'axe XX'. L'axe de la gorge de régulation 2 doit alors être adapté en conséquence, par exemple pour rester parallèle à l'axe YY'. Dans l'exemple illustré, l'axe YY' est séparé par une distance "d" d'excentration par rapport à l'axe XX' de rotation, et l'axe de perçage de la gorge 2 peut également être excentré par rapport à l'axe de rotation XX', par exemple d'une valeur sensiblement égale à "d". Le diamètre de perçage de la gorge 2 peut être avantageusement sensiblement égal au diamètre d'une canalisation formée par l'alignement de la première arrivée 12 et de la première sortie 14, de manière à ce que, pour au moins une position angulaire du boisseau 1, la gorge 2 vient s'aligner avec le passage de fluide joignant l'entrée 12 et la sortie 14, sans restreindre la section de passage de l'entrée vers la sortie.

Dans les exemples illustrés sur la figure 1 et sur la figure 2, le boisseau 1 se trouve dans une position repérée par une inclinaison α de l'axe de la gorge 2 par rapport à l'axe YY' de passage de l'air frais. Les bords de la gorge 2 du boisseau 1 viennent en partie s'insérer au travers du passage d'air frais joignant l'entrée 12 à la sortie 14, tout en laissant plus de la moitié de la section de ce passage disponible pour le passage de l'air frais. Si on fait tourner le boisseau 1 jusqu'à amener l'angle α à zéro, la gorge 2 est alors alignée avec le passage reliant l'entrée 12 à la sortie 14, et la section disponible pour le passage d'air frais est maximale. Si l'on continue ensuite à tourner le boisseau 1, toujours dans le même sens de rotation, une portion des parois latérales de la gorge 2 peut venir à nouveau s'interposer dans le passage d'air frais de la canalisation joignant l'entrée 12 et la sortie 14.

Lorsque l'on fait tourner le boisseau 1, par des moyens de commande connus non décrits ici, on fait donc varier la section de passage utile disponible pour le passage d'air frais entre l'entrée 12 et la sortie 14.

Sur la surface extérieure 7 du boisseau 1 est en outre ménagée une rainure longitudinale 3, rejoignant la gorge de régulation 2 et s'étendant parallèlement à l'axe XX' jusqu'à la deuxième arrivée de fluide 13, de manière à ce qu'un fluide arrivant par cette deuxième arrivée puisse se déverser dans la rainure. La rainure 3 s'étend en surface et sur au moins une portion de la profondeur radiale du boisseau 1, présente une largeur angulaire β (visible sur la figure 2) et une profondeur radiale «e».

La largeur angulaire β de la rainure est choisie supérieure à la largeur angulaire ω de la deuxième arrivée de fluide, de manière à ce que, quand la rainure 3 fait face à la deuxième arrivée de fluide 13, toute la section de l'arrivée 13 se trouve face à une portion de la rainure 3 de profondeur radiale «e».

En projection dans un plan perpendiculaire à l'axe de rotation XX', on peut définir un l'écart angulaire y entre l'axe YY' de circulation de l'air frais et la direction uu' d'injection de gaz EGR au niveau de l'entrée 13.

En projection dans un plan perpendiculaire à l'axe de rotation XX', on peut définir un écart angulaire δ entre la direction de perçage de la gorge 2 et un plan "tt"' passant par l'axe de rotation XX' et séparant la rainure 3 en deux portions d'égale étendue angulaire. Lorsque le plan tt' est aligné avec la direction uu' de circulation de gaz entrant par la deuxième arrivée 13, la rainure 3 se trouve en position "d'ouverture maximale" par rapport à l'arrivée 13, permettant un débit maximal de gaz EGR.

Les écarts angulaires γ et δ, le diamètre de l'arrivée 13 et l'ouverture angulaire β sont de préférence choisis de manière à ce que dans la position α=0 du boisseau, le plan tt'et l'axe uu' forment un angle différent de zéro et de valeur absolue inférieure à β/2, de manière à laisser passer du gaz EGR vers la gorge de régulation 2, et de manière à pouvoir par rotation du boisseau, accroître encore la section disponible pour le passage de gaz recirculés tout en réduisant la section disponible pour le passage d'air frais.

Ainsi, au fur et à mesure que l'on tourne le boisseau, en partant d'une première configuration où la gorge 2 permet un large passage, mais non un passage maximal, de l'air frais, position dans laquelle la deuxième arrivée 13 ne débouche pas encore dans la rainure 3, on fait évoluer la vanne vers d'autres configurations augmentant la section disponible pour le passage de l'air frais et autorisant un passage partiel de gaz EGR par la deuxième arrivée 13. En continuant à tourner le boisseau, on arrive à une position où le débit autorisé par la gorge 2 est maximal pour l'air frais, position dans laquelle simultanément la rainure 3 couvre toute l'ouverture de la deuxième arrivée 13. En continuant encore à tourner le boisseau, on continue à offrir une section de passage maximale au gaz EGR et on réduit ensuite légèrement la section disponible pour le passage de l'air frais, de manière à réduire la pression d'air frais et favoriser une remontée supplémentaire de gaz EGR.

L'invention ne se limite pas aux exemples de réalisation décrits, et peut se décliner en de nombreuses variantes. On peut envisager par exemple des modes de réalisation avec des formes de boisseaux sphériques comportant également un perçage perpendiculaire à l'axe de rotation formant une gorge de régulation, et une rainure parallèle à l'axe de rotation ou s'étendant au moins partiellement à la direction parallèle à l'axe, et débouchant dans la gorge. Dans l'exemple illustré, la première arrivée de fluide, la deuxième arrivée de fluide, la première sortie de fluide se trouvent toutes du même côté d'un même plan passant par l'axe de rotation XX'.

On peut envisager des variantes de réalisation, dans lesquelles la rainure 3, au lieu de déboucher par un bord longitudinal de la rainure 3 dans la gorge 2, serait traversée par la gorge 2 dans sa portion angulairement centrale. La position angulaire de la deuxième arrivée dans le carter devrait alors être adaptée, de manière à pouvoir passer d'une configuration où la deuxième arrivée 13 se trouve juste en bordure de la rainure 3, à une configuration où la deuxième arrivée se trouve sensiblement entièrement ouverte sur la rainure 3, et continue à rester entièrement ouverte sur la rainure 3 au-delà de l'angle du boisseau correspondant à la section de passage maximal disponible pour l'air frais.

On peut envisager des variantes de réalisation dans lesquelles la première arrivée de fluide forme un angle autour de l'axe XX' par rapport à la première sortie de fluide, la gorge de régulation étant percée pour former un angle correspondant.

On peut envisager des variantes de réalisation dans lesquelles les directions des arrivées de fluide et de la sortie de fluide ne sont pas perpendiculaires à l'axe de rotation du boisseau. La forme/la direction de perçage de la gorge de régulation peut être alors adaptée en conséquence.

Les rôles de l'entrée et de la sortie étant sensiblement interchangeables, on ne sort pas du cadre de l'invention dans les modes de réalisation où la sortie de gaz serait décalée angulairement par rapport à l'arrivée de gaz brûlés, les entrées de gaz brûlés et d'air frais se trouvant sensiblement à la même position axiale l'une par rapport à l'autre.

Avantageusement, l'arrivée de gaz brûlés et l'arrivée d'air frais sont décalées angulairement l'une par rapport à l'autre autour de l'axe de rotation du boisseau.

Avantageusement, la rainure est sensiblement parallèle à l'axe de rotation du boisseau. La rainure peut cependant ne pas être parallèle à l'axe de rotation du boisseau, par exemple peut courir le long d'une portion d'hélice autour de l'axe de rotation du boisseau. L'arrivée de gaz brûlés et l'arrivée d'air frais peuvent alors éventuellement déboucher dans un même secteur angulaire du boisseau.

La profondeur de la rainure e, les diamètres de la canalisation de passage de l'entrée 12 vers la sortie 14 et/ou le diamètre du perçage formant la gorge 2 peuvent être adaptés pour faire varier les débits relatifs souhaité entre le gaz EGR et l'air frais. La rainure peut n'être pas strictement parallèle à l'axe XX'.

Une vanne selon l'invention permet de réguler à l'aide d'une même vanne et d'un seul actionneur le mélange d'air frais et d'EGR que l'on souhaite envoyer vers les chambres de combustion du moteur.

Un système de vanne selon l'invention peut être utilisé pour doser sur le même principe des mélanges de deux fluides liquides ou de préférence gazeux, dans d'autres applications que l'alimentation en air d'un moteur.

On limite donc le nombre de composants à réaliser, l'encombrement du système de mélange et les problèmes thermiques liés précédemment à l'utilisation d'une vanne dans laquelle ne circulaient que les gaz EGR très chauds.

## Revendications

1. Groupe moteur comprenant un moteur à combustion interne, comprenant une arrivée d'air frais (12) et une arrivée de gaz brûlés recirculés (13) débouchant en amont des cylindres du moteur, l'arrivée d'air frais (12) et l'arrivée de gaz brûlés débouchants (13) dans une même vanne à boisseau rotatif (1) dont la sortie (14) est reliée à un collecteur d'admission du moteur, **caractérisé en ce que** l'arrivée d'air frais (12) et l'arrivée de gaz recirculés (13) sont décalées axialement l'une par rapport à l'autre le long de l'axe (XX') de rotation du boisseau (1).

2. Groupe moteur selon la revendication 1, **caractérisé en ce que** le boisseau rotatif (1) comprend une rainure (3) creusée à la surface du boisseau rotatif pour autoriser une entrée simultanée de gaz recirculés et d'air frais.

3. Groupe moteur selon la revendication 2, comprenant une sortie de fluide (14) partant de la vanne à boisseau vers le collecteur d'admission du moteur, la direction d'écoulement (YY') au niveau de la sortie de fluide (14) étant sensiblement alignée avec la direction de l'arrivée d'air frais (12).

4. Groupe moteur selon l'une des revendications 2 ou 3, comprenant un système de vanne à boisseau, le système de vanne comprenant un carter de vanne (4), le carter de vanne définissant
- une première arrivée de fluide (12) alignée avec une première sortie de fluide (14),
- une deuxième arrivée de fluide (13),
- un logement central (5) du carter, interposé entre la première arrivée de fluide (12) et la première sortie de fluide (14), et dans lequel débouche la deuxième arrivée de fluide (13),
le système de vanne comprenant en outre un boisseau (1) monté à l'intérieur du logement (5) pour être rotatif autour d'un axe (XX') de la vanne,
le boisseau (1) étant percé, transversalement à l'axe (XX'), d'une gorge de régulation (2) placée de manière à être successivement, en fonction de la position angulaire (α) du boisseau autour de l'axe, alignée à des degrés variables avec la première arrivée de fluide (12), de manière à offrir une section efficace de passage variable entre la première arrivée de fluide (12) et la première sortie de fluide (14),
la deuxième arrivée de fluide (13) étant décalée axialement par rapport à la première arrivée de fluide (12) et par rapport à la gorge de régulation (2),
et la rainure (3)s'étendant parallèlement à l'axe (XX'), entre la gorge de régulation (2) et la position axiale de la deuxième arrivée de fluide (13), la rainure (3) communiquant avec la gorge de régulation (2), la position (δ) et la largeur (β) angulaires de la rainure (3) étant choisies pour pouvoir successivement, en fonction de la position angulaire (α) du boisseau (1) autour de l'axe (XX'), isoler la deuxième arrivée de fluide (13) de la rainure (3) et de la gorge de régulation (2), puis faire déboucher la deuxième arrivée de fluide (13) dans la rainure (3) avec un recouvrement angulaire variable entre l'arrivée de fluide (13) et la rainure (3).

5. Groupe moteur selon la revendication 4, dans lequel la largeur angulaire (β) de la rainure (3) est supérieure ou égale à la largeur angulaire (ω) de la deuxième arrivée de fluide (13).

6. Groupe moteur selon l'une quelconque des revendications 4 ou 5, dans lequel l'axe d'écoulement (YY') joignant la première arrivée de fluide (12) et la première sortie de fluide (14) est excentré par rapport à l'axe de rotation (XX') du boisseau.

7. Groupe moteur selon l'une quelconque des revendications 4 à 6, dans lequel la gorge de régulation (2) est obtenue en effectuant un perçage cylindrique traversant le boisseau (1).

8. Groupe moteur selon l'une quelconque des revendications 4 à 7, dans lequel le logement central (5) du carter (4) entourant la surface extérieure (7) du boisseau (1) est sensiblement cylindrique.

9. Groupe moteur selon la revendication 8, dans lequel la rainure (3) présente une profondeur radiale (e) inférieure ou égale au quart du diamètre du boisseau.

10. Groupe moteur selon l'une quelconque des revendications 4 à 9, dans lequel la première arrivée de fluide (12) est décalée angulairement autour de l'axe de rotation (XX') du boisseau par rapport à la deuxième arrivée de fluide (13), d'une valeur angulaire telle qu'au cours de la rotation du boisseau, au début du recouvrement partiel de la rainure (3) avec la deuxième arrivée de fluide (13), l'axe de la gorge de régulation (2) est incliné (α) dans un premier sens par rapport à un axe commun (YY') de la première arrivée de fluide (12) et de la première sortie de fluide (14), et à la fin du recouvrement total de la deuxième arrivée de fluide (13) par la rainure (3), l'axe de la gorge de régulation (2) est incliné dans un second sens opposé au premier sens, par rapport à l'axe commun (YY') de la première arrivée de fluide (12) et de la première sortie de fluide (14).

## Patentansprüche

1. Motoreinheit, aufweisend einen Verbrennungsmotor, welcher eine Frischluftzuleitung (12) und eine Zuleitung von rückgeführten Verbrennungsgasen (13), welche stromaufwärts der Zylinder des Motors münden, wobei die Frischluftzuleitung (12) und die Zuleitung von rückgeführten Verbrennungsgasen (13) in einem gleichen Drehschieberventil (1) münden, dessen Ausgang (14) mit einem Ansaugrohr des Motor verbunden ist, **dadurch gekennzeichnet, dass** die Frischluftzuleitung (12) und die Zuleitung von rückgeführten Verbrennungsgasen (13) axial zueinander entlang der Drehachse (XX') des Schiebers (1) versetzt sind.

2. Motoreinheit nach Anspruch 1, **dadurch gekennzeichnet, dass** der Drehschieber (1) eine Nut (3) aufweist, welche an der Oberfläche des Drehschiebers ausgehöhlt ist, um einen gleichzeitigen Einlass von rückgeführten Gasen und Frischluft zu erlauben.

3. Motoreinheit nach Anspruch 2, aufweisend einen Fluidausgang (14), welcher von dem Schieberventil in Richtung auf das Ansaugrohr des Motors abgeht, wobei die Strömungsrichtung (YY') im Bereich des Fluidausgangs im Wesentlichen mit der Richtung der Frischluftzuleitung (12) ausgerichtet ist.

4. Motoreinheit nach einem der Ansprüche 2 oder 3, aufweisend ein Drehschieberventilsystem, wobei das Ventilsystem ein Ventilgehäuse (4) aufweist, wobei das Ventilgehäuse
- eine erste, mit einem ersten Fluidausgang (14) ausgerichtete Fluidzuleitung (12),
- eine zweite Fluidzuleitung (13),
- eine zentrale Aufnahme (5) des Gehäuses definiert, welche zwischen der ersten Fluidzuleitung (12) und der zweiten Fluidzuleitung (13) zwischengesetzt ist, und in welche die zweite Fluidzuleitung (13) mündet,
wobei das Ventilsystem außerdem einen Schieber (1) aufweist, welcher im Inneren der Aufnahme (5) montiert ist, um um eine Ventilachse (XX') drehbar zu sein, wobei der Schieber (1) quer zu der Achse (XX') mit einer Regulierungskehle (2) durchbohrt ist, welche angeordnet ist, um in Abhängigkeit von der Winkelstellung (α) des Schiebers um die Achse nacheinander in variablen Stufen mit der ersten Fluidzuleitung (12) ausgerichtet zu sein, um einen variablen, wirksamen Durchflussquerschnitt zwischen der ersten Fluidzuleitung (12) und dem Fluidausgang (14) zu bieten,
wobei die zweite Fluidzuleitung (13) in Bezug zu der ersten Fluidzuleitung (12) und in Bezug zu der Regulierungskehle (2) axial versetzt ist,
und wobei sich die Nut (3) parallel zu der Achse (XX') zwischen der Regulierungskehle (2) und der axialen Position der zweiten Fluidzuleitung (13) erstreckt, wobei die Nut (3) mit der Regulierungskehle (2) kommuniziert, wobei die Position (δ) und die Winkelbreite (β) der Nut (3) ausgewählt ist, um nacheinander in Abhängigkeit von der Winkelstellung (α) die zweite Fluidzuleitung (13) von der Nut (3) und der Regulierungskehle (2) isolieren zu können und dann die zweite Fluidzuleitung (13) in die Nut (3) mit einer variablen Winkelabdeckung zwischen der Fluidzuleitung (13) und der Nut (3) münden zu lassen.

5. Motoreinheit nach Anspruch 4, bei welcher die Winkelbreite (β) der Nut (3) größer oder gleich der Winkelbreite (ω) der zweiten Fluidzuleitung (13) ist.

6. Motoreinheit nach einem der Ansprüche 4 oder 5, bei welcher die Strömungsachse (YY'), welche die erste Fluidzuleitung (12) und den ersten Fluidausgang (14) verbindet, in Bezug zu der Drehachse (XX') des Schiebers dezentriert ist.

7. Motoreinheit nach einem der Ansprüche 4 bis 6, bei welcher die Regulierungskehle (2) erzielt wird, indem eine zylindrische Bohrung ausgeführt wird, welche den Schieber (1) durchquert.

8. Motoreinheit nach einem der Ansprüche 4 bis 7, bei welcher die zentrale Aufnahme (5) des Gehäuses (4), welche die äußere Fläche (7) des Schiebers (1) umgibt, im Wesentlichen zylindrisch ist.

9. Motoreinheit nach Anspruch 8, bei welcher die Nut (3) eine radiale Tiefe (e) aufweist, welche kleiner oder gleich ein Viertel des Durchmessers des Schiebers ist.

10. Motoreinheit nach einem der Ansprüche 4 bis 9, bei welcher die erste Fluidzuleitung (12) in Bezug zu der zweiten Fluidzuleitung (13) über den Umfang um die Drehachse (XX') des Schiebers herum um einen Winkelwert derartig versetzt ist, dass im Verlauf der Drehung des Schiebers zu Beginn der teilweisen Überdeckung der Nut (3) mit der zweiten Fluidzuleitung (13) die Achse der Regulierungskehle (2) in einer ersten Richtung in Bezug auf eine gemeinsame Achse (YY') der ersten Fluidzuleitung (12) und des ersten Fluidausgangs (14) geneigt ist (α) und am Ende der gesamten Überdeckung der zweiten Fluidzuleitung (13) durch die Nut (3) die Achse der Regulierungskehle (2) in einer zweiten, der ersten Richtung entgegengesetzten Richtung in Bezug auf eine gemeinsame Achse (YY') der ersten Fluidzuleitung (12) und des ersten Fluidausgangs (14) geneigt ist.

## Claims

1. Engine unit comprising an internal combustion engine, comprising a fresh-air inlet (12) and a recirculated-burnt-gas inlet (13) opening upstream of the cylinders of the engine, the fresh-air inlet (12) and the burnt-gas inlet (13) opening into one and the same rotary plug valve (1), the outlet (14) of which is connected to an intake manifold of the engine, **characterized in that** the fresh-air inlet (12) and the recirculated-gas inlet (13) are offset axially with respect to one another along the axis (XX') of rotation of the plug (1).

2. Engine unit according to Claim 1, **characterized in that** the rotary plug (1) comprises a slot (3) formed in the surface of the rotary plug to allow a simultaneous entry of recirculated gases and fresh air.

3. Engine unit according to Claim 2, comprising a fluid outlet (14) starting from the plug valve towards the intake manifold of the engine, the direction of flow (YY') at the fluid outlet (14) being substantially aligned with the direction of the fresh-air inlet (12) .

4. Engine unit according to either of Claims 2 and 3, comprising a plug valve system, the valve system comprising a valve casing (4), the valve casing defining
- a first fluid inlet (12) aligned with a first fluid outlet (14),
- a second fluid inlet (13),
- a central housing (5) of the casing, interposed between the first fluid inlet (12) and the first fluid outlet (14), and into which the second fluid inlet (13) opens,
the valve system additionally comprising a plug (1) mounted inside the housing (5) so as to be rotatable about an axis (XX') of the valve,
the plug (1) being pierced, transversely to the axis (XX'), by a regulation groove (2) placed so as to be successively, as a function of the angular position (α) of the plug around the axis, aligned to variable degrees with the first fluid inlet (12), so as to offer an effective variable passage cross section between the first fluid inlet (12) and the first fluid outlet (14),
the second fluid inlet (13) being offset axially with respect to the first fluid inlet (12) and with respect to the regulation groove (2),
and the slot (3) extending parallel to the axis (XX'), between the regulation groove (2) and the axial position of the second fluid inlet (13), the slot (3) communicating with the regulation groove (2), the angular position (δ) and the angular width (β) of the slot (3) being chosen in order to be able successfully, as a function of the angular position (α) of the plug (1) around the axis (XX'), to isolate the second fluid inlet (13) from the slot (3) and from the regulation groove (2), and then to cause the second fluid inlet (13) to open into the slot (3) with a variable angular overlapping between the fluid inlet (13) and the slot (3).

5. Engine unit according to Claim 4, in which the angular width (β) of the slot (3) is greater than or equal to the angular width (ω) of the second fluid inlet (13).

6. Engine unit according to either one of Claims 4 and 5, in which the axis of flow (YY') joining the first fluid inlet (12) and the first fluid outlet (14) is off-centred with respect to the axis of rotation (XX') of the plug.

7. Engine unit according to any one of Claims 4 to 6, in which the regulation groove (2) is obtained by performing a cylindrical piercing which passes through the plug (1).

8. Engine unit according to any one of Claims 4 to 7, in which the central house (5) of the casing (4) surrounding the outer surface (7) of the plug (1) is substantially cylindrical.

9. Engine unit according to Claim 8, in which the slot (3) has a radial depth (e) which is less than or equal to a quarter of the diameter of the plugs.

10. Engine unit according to any one of Claims 4 to 9, in which the first fluid inlet (12) is offset angularly about the axis of rotation (XX') of the plug with respect to the second fluid inlet (13) by an angular value such that, during the rotation of the plug, at the start of the partial overlapping of the slot (3) with the second fluid inlet (13), the axis of the regulation groove (2) is inclined (α) in a first direction with respect to a common axis (YY') of the first fluid inlet (12) and of the first fluid outlet (14), and, at the end of the total overlapping of the second fluid inlet (13) by the slot (3), the axis of the regulation groove (2) is inclined in a second direction opposite to the first direction with respect to the common axis (YY') of the first fluid inlet (12) and of the first fluid outlet (14).
